# EUROPEAN PATENT SPECIFICATION

(11) **EP 0 742 095 B1**
(45) Date of publication and mention of the grant of the patent: **13.02.2002**
(21) Application number: 96200720.9
(22) Date of filing: 15.03.1996
(51) Int. Cl.: B32B 5/22, B29C 70/88, H01Q 17/00

(54) **Composite material structure able to absorb and dissipate incident electromagnetic radiation power, in particular for air, water and land craft and for fixed ground installations**
Verbundwerkstoffstruktur, fähig zur Absorption und Dissipation von auffallender elektromagnetischer Strahlungsenergie, insbesondere für Luft-, See- und Landfahrzeuge und für feste Bodeneinrichtungen
Structure de matériau composite apte à absorber et dissiper l'énergie de rayonnement électromagnétique incident, notamment pour véhicules routiers, aéronefs et navires et pour installations fixées à la terre

(30) Priority: 12.05.1995 IT MI950970
(43) Date of publication of application: 13.11.1996
(73) Proprietor: FINMECCANICA S.p.A., 00197 Roma (IT)
(72) Inventor: Sgherri, Roberto, 19020 Fezzano di Portovenere, La Spezia (IT); Simonini, Stefano, 54100 Massa (IT)
(74) Representative: Fusina, Gerolamo

(56) References cited:
- EP-A- 0 121 655
- EP-A- 0 243 162
- WO-A-94/13878
- FR-A- 2 656 146
- FR-A- 2 743 940
- GB-A- 2 058 469
- US-A- 4 606 848
- US-A- 5 003 311
- US-A- 5 134 421
- DATABASE WPI Week 8137 Derwent Publications Ltd., London, GB; AN 81-67221D XP002058539 & JP 52 044 542 A (MITSUBISHI OIL CO) , 7 April 1977

## Description

This invention relates to a composite material structure able to absorb and dissipate electromagnetic radiation power according to the preamble of claim 1. It is used mainly as cladding for air, water and land craft and for fixed ground installations, to prevent their identification by radar. As is well known, radar operation is based on the fact that electromagnetic radiation emitted by a source undergoes reflection on striking objects.

The causes of such reflection usually reside in the objects' geometry and in diffraction and diffusion phenomena deriving from their shape, their outline, any discontinuity and finally the type of material used for their construction. In order to limit the power of the radiation reflected by the object and consequently make the object invisible to radar it is therefore necessary to appropriately choose the geometry of the object and its constituent material, taking account of the fact that a compromise must in any event be reached with the functionality of the object, which must always be operable and structurally strong.

Currently used structures consist of multilayers (composite materials) of variable thickness, number of layers and overall weight. These parameters depend on the radar-emitted radiation frequencies for which it is required that the object remains substantially invisible.

Said structures are disclosed, for example, in US 4,606,848 and US 5,003,311 which discloses a composite material structure according to the preamble of claim 1 and usually consist of an outer paint layer, followed by inner dielectric layers (formed from kevlar, glass fabric, polyester fibre, epoxy and phenolic resins, plastics, polyurethane and polyacrylimide foams or balsa), alternating with absorbent and dissipative material, and a final layer able to reflect electromagnetic radiation as much as possible (composed generally of carbon fabric, metallized fabrics, conductive paints or metal foil).

The absorbent material layers are formed from resins, plastics or polyurethane foams, mixed with conducting materials (ferrite, graphite or metal powders). The resins, plastics or foams enable thin layers of absorbent material to be rolled (from 0.1 millimetres to 3-4 centimetres), but do not have notable electromagnetic properties, as they represent dielectric materials with substantially no dielectric losses or dielectric conductivity. In contrast, the conducting materials (the so-called "active substances") have structural characteristics such as to induce strong electromagnetic radiation power absorption within them and dissipation thereof in the form of heat. However, currently known structures satisfy only some of the electromagnetic and/or mechanical characteristics for use. In this respect, absorbent materials designed and constructed for example for application to measurement laboratories or anechoic chambers present a wide frequency range ("attenuation band") within which the electromagnetic radiation power is attenuated (more than one octave within the frequency range from 1 to 20 GHz) and a considerable absorption within the attenuation band (more than 20 dB in horizontal and vertical polarization), but provide limited performance from the mechanical viewpoint, in terms of weight, large thickness, low tensile strength and fragility.

Again, materials for military use, for which good structural characteristics are required, are characterised by limited performance in terms of electromagnetic characteristics, such as the attenuation band (the frequency range is limited to one octave) and the electromagnetic radiation power absorption within the attenuation band (limited to 13 dB).

An object of the present invention is to provide a composite material structure able to absorb and dissipate the incident electromagnetic radiation power which obviates the aforesaid drawbacks, ie to provide an absorbent material layer positioned within the structure which gives the structure notable electromagnetic properties and, at the same time, mechanical characteristics better than those of known structures, so enabling it to be used in environments in which considerable structural rigidity is required.

A further object of the invention is to provide a composite material structure able to absorb and dissipate incident electromagnetic radiation power which can be used for both civil and military purposes and which satisfies current national and international standards for these uses.

A further object of the invention is to provide a composite material structure able to form the outer cladding of an object and hence, as such, can be externally painted, is of simple low-cost construction and does not require the use of complicated or particularly costly techniques.

These and further objects are attained by a composite material structure able to absorb and dissipate incident electromagnetic radiation power for use, in particular, on air, water or land craft and on fixed ground installations, in accordance with claim 1.

Advantageously, the composite material structure according to the present invention uses a plurality of superposed layers of absorbent material such as to improve the electromagnetic, electrical and mechanical properties of the entire structure compared with the known art. Between one layer and the next there is provided a further layer formed from dielectric material.

In particular, the use of carbon fibre dipoles immersed in a dielectric material of substantially zero conductivity (resin, plastic, polyurethane foam) enables thin layers of absorbent material to be rolled (with consequent advantages in terms of space limitation, structure thinness, low manufacturing cost), possessing electromagnetic characteristics such as to induce radiation power dissipation greater than and within a wider frequency range than structures used up to the present time, while at the same time possessing mechanical properties specific for the particular application, such as hardness of the structure outer surface, lightness, tensile strength, bending strength and considerable elasticity.

The application of said structure in external environments (aircraft structures, parts of ships and submarines, naval shields, protection systems, containers, launchers, armoured vehicles, turrets, antenna supports) or internal environments (anechoic chambers, measurement laboratories) confirms its versatility of use in both the civil and military fields; moreover it is designed to satisfy national and international standards current in these fields, which relate to limits of exposure of the human body to electromagnetic radiation, physical and electromagnetic characteristics necessary for its use on Police and Customs and Excise vehicles, and ballistic protection limits where the structure is used as an armament material.

Finally, its compatibility with specific applicational environments makes it easy to install and to be integrated with already existing structures. For example, the facility for forming very thin layers and the fact of being able to paint the most outer layer of the resultant structure enable it to be easily fitted to missiles, ships, vehicles or parts thereof by simply being positioned or glued on them.

Further objects and advantages of the present invention will be apparent from the description thereof given hereinafter with reference to the accompanying drawings, which are provided by way of non-limiting example and in which:
Figure 1 is a schematic perspective view of a portion of a first embodiment (by way of non-limiting example) of the composite material structure of the present invention;
Figure 2 is a schematic view of one of the component carbon fibre dipoles of the layer of absorbent and dissipative material of the structure of Figure 1;
Figure 3 is a cartesian graph showing schematically the real part of the dielectric constant plotted against incident electromagnetic radiation frequency for a first absorbent and dissipative material layer of a second embodiment (by way of non-limiting example) of the structure of the present invention;
Figure 4 is a cartesian graph showing schematically the imaginary part of the dielectric constant plotted against incident electromagnetic radiation frequency for the first absorbent and dissipative material layer of that embodiment of the structure shown in Figure 3;
Figure 5 is a cartesian graph showing schematically the real part of the dielectric constant plotted against incident electromagnetic radiation frequency for a second absorbent and dissipative material layer of that embodiment of the structure shown in Figure 3;
Figure 6 is a cartesian graph showing schematically the imaginary part of the dielectric constant plotted against incident electromagnetic radiation frequency for the second absorbent and dissipative material layer of that embodiment of the structure shown in Figure 3;
Figure 7 is a cartesian graph showing schematically the reflectivity (ratio of reflected electromagnetic energy to incident electromagnetic energy) for that embodiment of the structure shown in Figure 3 plotted against incident electromagnetic radiation frequency.

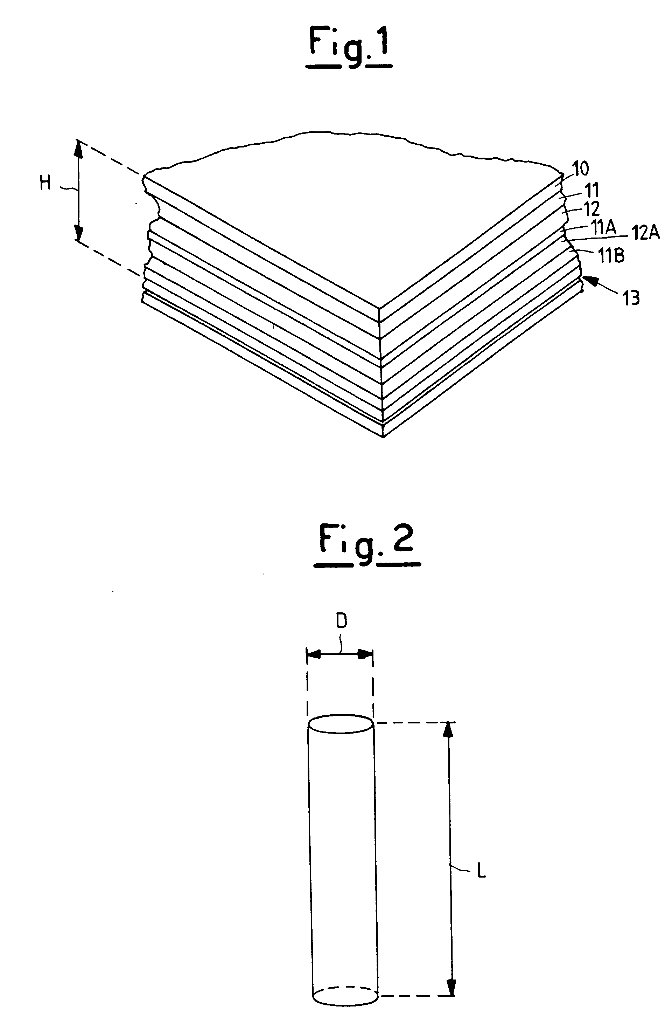

In Figure 1 the reference numeral 10 indicates the most outer layer of the composite material structure, which is generally painted. The reference numerals 11, 11A, 11B indicate three dielectric material layers formed from aramid fibre (Kevlar™) fabric, glass, epoxy resins, rubber or insulating foams, alternating with two absorbent and dissipative material layers, indicated by 12, 12A, formed from resins, plastics or insulating foams mixed with a variable quantity of carbon fibre dipoles. The reference numeral 13 indicates an electrically conducting material layer which reflects electromagnetic radiation and has a structure which is specific for the particular type of application. It is formed from carbon fabric, nickel-coated polyester fabric, metallized fabrics, conductive paints or metal foil. A suitable quantity of epoxy resin is used as the adhesive between the layers.

The total structure thickness, indicated by H, is given by the sum of the thicknesses of each composite material layer and is chosen on the basis of its use and the frequency range of the incident radiation within which the object is required to be invisible. It usually varies between 1 millimetre and 100 millimetres.

The number, the thickness and the order of succession of layers of dielectric material 11, 11A, 11B and layers of absorbent and dissipative material 12, 12A (all mutually superposed and alternating) are parameters which again depend on the scheduled use for the structure and the frequency range of the emitted electromagnetic radiation within which the object is required not to be intercepted.

With reference to Figure 2, L indicates the length of a carbon fibre dipole and D indicates the base diameter of the dipole. The dipoles in question are in the form of cylindrical carbon fibre rods and are components of each absorbent and dissipative layer 12, 12A of the structure, in mixture with other dielectric substances.

The number of dipoles also depends on the scheduled use for the structure and the frequency range of the incident electromagnetic radiation within which the object is required to be invisible. The length of each dipole varies from a minimum of 1 millimetre to 15 millimetres, whereas its base diameter varies from 0.1 micron to 20 microns. The weight of the dipoles per square metre of absorbent and dissipative layer 12, 12A is in any event less than 2 grams.

The length of the dipoles, their base diameter and their weight per square metre of absorbent and dissipative layer 12, 12A are variable parameters which influence the electrical and electromagnetic characteristics of the structure, in that any variation thereof influences the dielectric constant, which characterises the absorbent and dissipative layer 12, 12A and which itself depends on the frequency of the incident electromagnetic radiation.

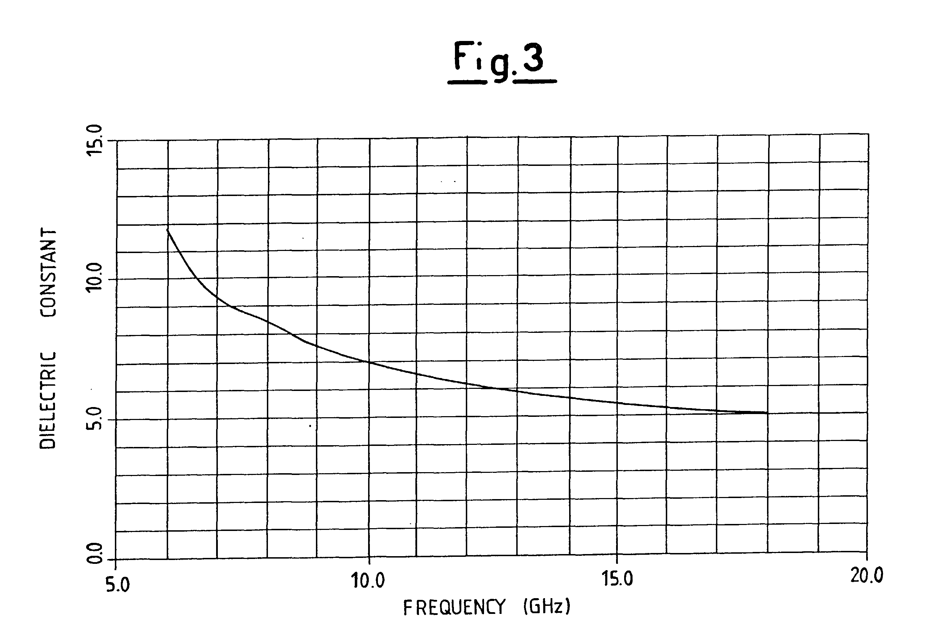

Figures 3 to 7 show the variation of certain electromagnetic parameters characteristic of the absorbent and dissipative layer 12, 12A in the particular case of one embodiment of the structure according to the invention.

The embodiment in question relates to a structure consisting of several superposed layers. Starting from the region of contact with the object, these consist respectively of an electrically conducting and reflecting carbon fabric layer of 0.2 millimetre thickness, a first layer of dielectric material (in particular polymethacrylimide, having a dielectric constant modulus of 1.1) of 2.5 millimetre thickness, a first absorbent and dissipative layer 12, 12A, a 3 millimetre thick second layer of dielectric material of the same type as the first dielectric layer, a second absorbent and dissipative layer 12, 12A, a 2.5 millimetre thick third layer of dielectric material of the same type as the first and second dielectric layer, a 0.7 mm thick fourth layer of dielectric material in the form of kevlar fabric (aramid fibre) and finally an outer layer of paint. The carbon fibre dipoles contained in the absorbent and dissipative layers 12, 12A have a length L of 4 millimetres and a base diameter D of 7 microns. The dipoles present in the first absorbent layer 12, 12A have a weight of 0.083 grams per square metre. The dipoles present in the second absorbent layer 12, 12A have a weight of 0.250 grams per square metre. The epoxy resin mixed (as dielectric material) with the carbon fibre dipoles has a weight of 0.5 kilograms per square metre in the first absorbent layer 12, 12A and a weight of 1 kilogram per square metre in the second absorbent layer 12, 12A. The total weight of the structure is 4 kilograms per square metre and its total thickness is 1 centimetre.

The absorbent and dissipative layers 12, 12A do not present magnetic losses.

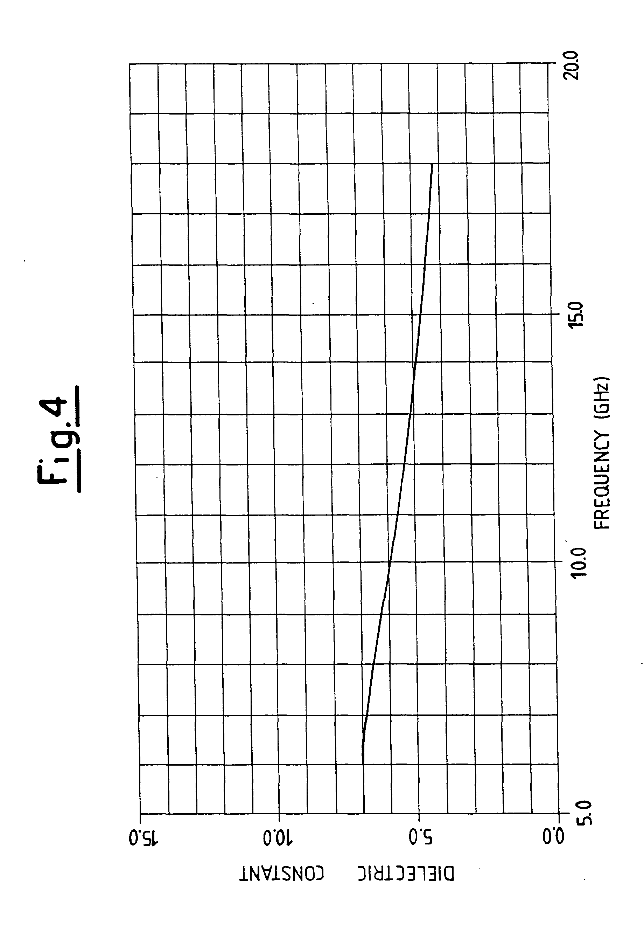

The graphs of the real part and imaginary part of the dielectric constant of the second absorbent and dissipative layer 12, 12A plotted against the frequency of the incident electromagnetic radiation are shown in Figures 3 and 4 respectively.

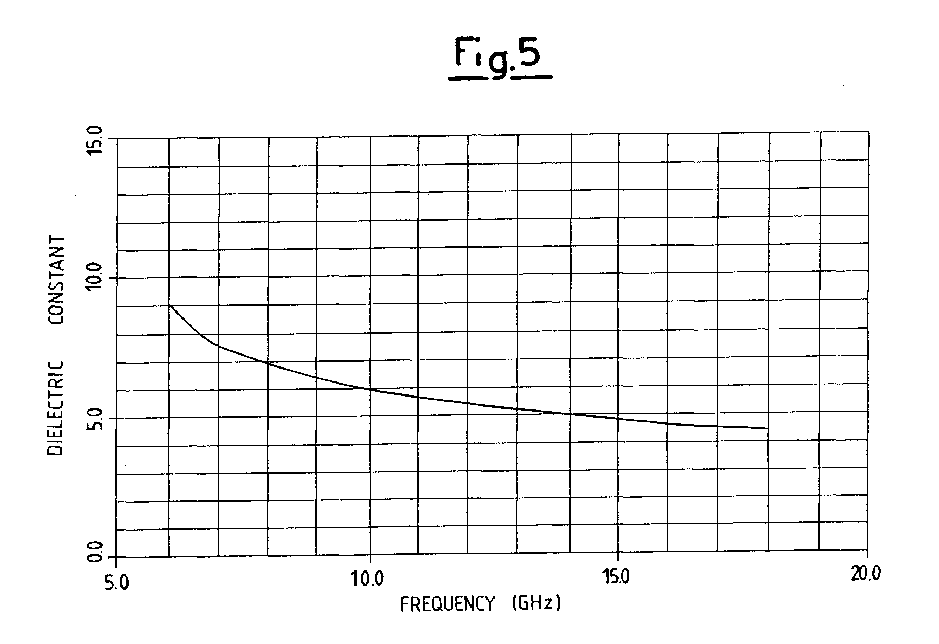

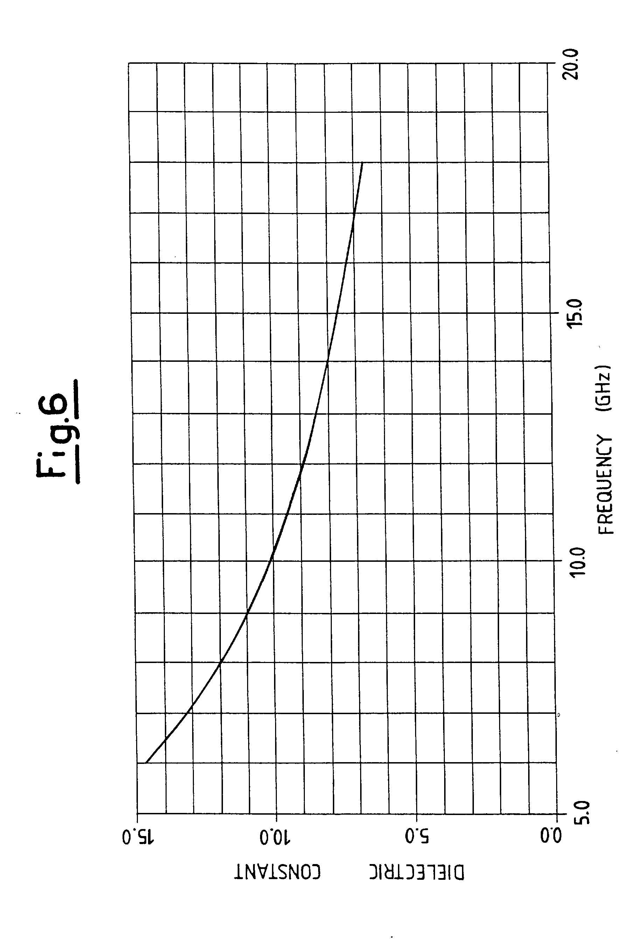

The graphs of the real part and imaginary part of the dielectric constant of the first absorbent and dissipative layer 12, 12A plotted against the frequency of the incident electromagnetic radiation are shown in Figures 5 and 6 respectively.

These cartesian graphs were derived from laboratory tests and experiments and show that the real part and imaginary part of the dielectric constant of the absorbent material decrease as the frequency of the incident radiation increases.

In particular, as the frequency increases the imaginary part of the dielectric constant of the second absorbent and dissipative layer 12, 12A decreases, relative to the average value of the frequency range considered (6 GHz - 18 GHz), to a lesser extent than the corresponding real part. In contrast, in the case of the first absorbent and dissipative layer 12, 12A, the imaginary part of the dielectric constant decreases, relative to the said average value of the frequency range considered (6 GHz - 18 GHz), to a greater extent than the corresponding real part.

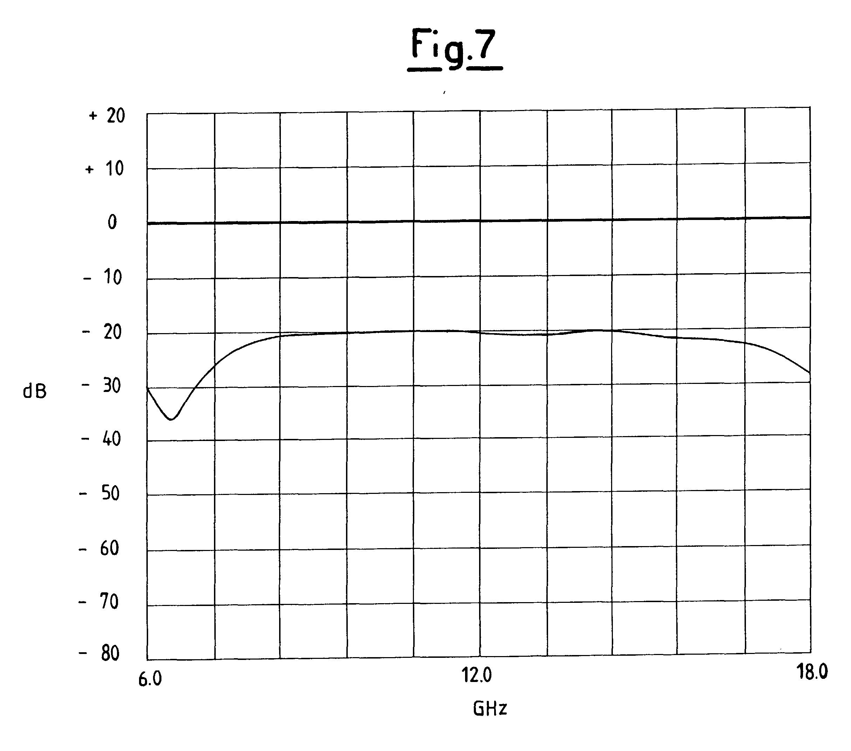

The cartesian graph of Figure 7 shows the variation of the reflectivity (ratio of reflected electromagnetic energy to incident electromagnetic energy) of the structure of the present invention compared with the reflectivity, taken as the reference value, of a similar structure which completely reflects the electromagnetic radiation.

The reference value is represented on the graph by a horizontal line positioned, for calibration purposes, at 0 dB.

The structure of the present invention absorbs electromagnetic radiation power within a frequency range from 5 GHz to 26 GHz. In addition, within the stated frequency range the reduction in reflectivity, compared with an ideally reflecting similar structure, exceeds 20 dB (the ratio of the electromagnetic radiation power reflected by the structure to the electromagnetic radiation power reflected by an analogous ideally reflecting structure is shown in dB). In practice, this means that the electromagnetic radiation power reflected by the structure of the invention is equal to 1/100, in both polarizations (horizontal and vertical) of the electromagnetic field, of that reflected by the ideally reflecting analogous structure.

Other experimental tests conducted on similar structures used on air, water and land craft highlight specific mechanical characteristics in addition to the aforesaid electromagnetic properties. In these structures, the frequency of the incident electromagnetic radiation and their application determine the number of dielectric material layers 11, 11A, 11B, the number of absorbent and dissipative layers 12, 12A (from a minimum of one to a maximum of three), the order of the succession of dielectric material layers 11, 11A, 11B and absorbent layers 12, 12A, the type of dielectric material used, the composition of the absorbent and dissipative layer 12, 12A, the thickness of the layers and the type of adhesive.

The electromagnetic characteristics and the mechanical properties of the structure of the present invention are in all cases superior to the electromagnetic characteristics and mechanical properties of structures of the known art.

In particular, the attenuation band extends within an incident radiation frequency range from 1 to 30 GHz, the average value of the absorbed power within the attenuation band being greater than 20 dB (the ratio of the electromagnetic radiation power reflected by the structure to the incident electromagnetic radiation power is indicated in dB) in horizontal and vertical polarization.

In addition the hardness of the absorbent and dissipative layer 12, 12A, expressed in conventional numbers in accordance with the Shore measurement method, exceeds 80, the tensile strength exceeds 15 newtons per square millimetre, and the normal modulus of elasticity of the entire structure exceeds 2500 newtons per square millimetre.

Finally, in accordance with United States Military Standard MIL-P-46593-A, the absorbent and dissipative layer 12, 12A of those structures of this type intended for military use attains a "ballistic limit" expressed in terms of impact velocity (of a 17 grain splinter simulator projectile) corresponding to a 50% probability of perforation, equal to 350 metres per second. The impact velocity can be easily increased by inserting further dielectric material layers 11, 11A, 11B.

The characteristics of the composite material structure for absorbing and dissipating incident electromagnetic radiation power according to the present invention are apparent from the aforegoing description, as are its advantages.

In this respect:
- the mechanical characteristics of the composite material structure of the present invention enable it to be used for constructing or covering objects subjected to mechanical stress and exposed to atmospheric agents;
- the materials of the known art, even if they attain electromagnetic properties comparable to those of the said structure, do not have the same mechanical strength, hardness and lightness characteristics, and cannot for example be used in applications in which they perform a load-bearing function;
- their electromagnetic properties, in terms of the attenuation band and absorption within the attenuation band, are superior to those of known structures;
- the absorbent and dissipative layers are constructed by simple and economical procedures for every specific application;
- the composite material structure of the present invention can be used for both civil and military uses, and is designed to satisfy current national and international standards for these uses.

## Claims

1. A composite material structure able to absorb and dissipate incident electromagnetic radiation power, of the type used for air, water and land craft and for fixed ground installations, comprising at least one layer of paint (10), at least one layer of dielectric material (11, 11A, 11B), at least one layer of absorbent and dissipative material (12, 12A), able to absorb and dissipate incident electromagnetic radiation power and consisting of dielectric substances mixed with electrically conducting substances, and at least one layer of electrically conducting material (13), able to reflect incident electromagnetic radiation, wherein said layers of dielectric material (11, 11A, 11B) and said layers of absorbent and dissipative material (12, 12A) are reduced to sheets and said layers of paint (10), said layers of dielectric material (11, 11A, 11B), said layers of absorbent and dissipative material (12, 12A) and said layers of electrically conducting material (13), forming the entire structure, are joined together by adhesive substances, said electrically conducting substances being constituted by a plurality of carbon fibre dipoles, **characterized in that** said carbon fibre dipoles have a cylindrical shape, with a length varying from 1 to 15 mm, a base diameter varying from 0.1 to 20 µm and a weight less than or equal to 2 grams per m² of said layer of absorbent and dissipative material (12, 12A), **in that** said absorbent and dissipative material layer (12,12A) has a tensile strength of at least 15 N per mm² and **in that** said composite material structure has a normal modulus of elasticity of at least 2500 N per mm² of surface of the structure.

2. A composite material structure able to absorb and dissipate incident electromagnetic radiation power as claimed in claim 1, **characterised in that** said dielectric substances mixed with said electrically conducting substances consist of resins or plastics or polyurethane foams.

3. A composite material structure able to absorb and dissipate incident electromagnetic radiation power as claimed in claim 1, **characterised in that** said layers of paint (10), said layers of dielectric material (11, 11A, 11B), said layers of absorbent and dissipative material (12, 12A) and said layers of electrically conducting material (13), which form the entire structure, are joined together by epoxy resins.

4. A composite material structure able to absorb and dissipate incident electromagnetic radiation power as claimed in claim 1, **characterised in that** the assembly of said electrically conducting substances, of which said layer of absorbent and dissipative material (12, 12A) is composed, has a ballistic limit expressed in terms of impact velocity corresponding to a 50% probability of perforation, of at least 350 metres per second, said limit being measured by a 17 grain splinter simulator projectile, in accordance with United States Military Standard MIL-P-46593-A.

5. A composite material structure able to absorb and dissipate incident electromagnetic radiation power as claimed in claim 1, **characterised in that** the electromagnetic radiation power reflected by said structure, in both horizontal and vertical polarizations of the electromagnetic field, is on an average at least 1/100 of the power reflected by an ideally reflecting similar structure, within a frequency range of said incident electromagnetic radiation from 1 gigahertz to 30 gigahertz.

6. A composite material structure able to absorb and dissipate incident electromagnetic radiation power as claimed in claim 1, **characterised in that** the thickness range of said layer of absorbent and dissipative material (12, 12A) is from 0.1 millimetres to 3 centimetres.

7. A composite material structure able to absorb and dissipate incident electromagnetic radiation power as claimed in claim 1, **characterised in that** the thickness range of said structure is from 1 millimetre to 100 millimetres.

## Patentansprüche

1. Verbundwerkstoffstruktur, die eine einfallende elektromagnetische Strahlungsenergie absorbieren und dissipieren kann, von der Art, die für Luft-, See- und Landfahrzeuge und für feste Bodeneinrichtungen verwendet wird, umfassend zumindest eine Schicht aus Farbe (10), zumindest eine Schicht aus einem dielektrischen Material (11, 11A, 11B), zumindest eine Schicht aus einem absorbierenden und dissipierenden Material (12, 12A), die einfallende elektromagnetische Strahlungsenergie absorbieren und dissipieren kann und aus dielektrischen Stoffen besteht, die mit elektrisch leitenden Stoffen vermischt sind, sowie zumindest eine Schicht aus elektrisch leitendem Material (13), die einfallende elektromagnetische Strahlung reflektieren kann, wobei die Schichten aus dielektrischem Material (11, 11A, 11B) und die Schichten aus absorbierendem und dissipierendem Material (12, 12A) zu Lagen reduziert sind und die Schichten aus Farbe (10), die Schichten aus dielektrischem Material (11, 11A, 11B), die Schichten aus absorbierendem und dissipierendem Material (12, 12A) sowie die Schichten aus elektrisch leitendem Material (13), welche die Gesamtstruktur ausbilden, mit Hilfe von Klebstoffen miteinander verbunden sind, wobei die elektrisch leitenden Stoffe aus einer Mehrzahl von Kohlefaser-Dipolen zusammengesetzt sind, **dadurch gekennzeichnet, dass** die Kohlefaser-Dipole eine zylindrische Form haben, mit einer Länge, die von 1 bis 15 mm variiert, einem Basisdurchmesser, der von 0,1 bis 20 µm variiert, und einem Gewicht kleiner oder gleich 2 Gramm pro Quadratmeter der Schicht aus absorbierendem und dissipierendem Material (12, 12A), dass die absorbierende und dissipierende Materialschicht (12, 12A) eine Zugfestigkeit von mindestens 15 N pro Quadratmillimeter aufweist und dass die Verbundwerkstoffstruktur ein Normal-Elastizitätsmodul von mindestens 2.500 N pro Quadratmillimeter Flächen der Struktur aufweist.

2. Verbundwerkstoffstruktur nach Anspruch 1, die eine einfallende elektromagnetische Strahlungsenergie absorbieren und dissipieren kann, **dadurch gekennzeichnet, dass** die dielektrischen Stoffe, die mit den elektrisch leitenden Stoffen vermischt sind, aus Harzen oder Kunstoffen oder Polyurethan-Schäumen bestehen.

3. Verbundwerkstoffstruktur nach Anspruch 1, die eine einfallende elektromagnetische Strahlungsenergie absorbieren und dissipieren kann, **dadurch gekennzeichnet, dass** die Schichten aus Farbe (10), die Schichten aus dielektrischem Material (11, 11A, 11B), die Schichten aus absorbierendem und dissipierendem Material (12, 12A) und die Schichten aus elektrisch leitendem Material (13), welche die Gesamtstruktur ausbilden, mittels Epoxidharzen miteinander verbunden sind.

4. Verbundwerkstoffstruktur nach Anspruch 1, die eine einfallende elektromagnetische Strahlungsenergie absorbieren und dissipieren kann, **dadurch gekennzeichnet, dass** der Aufbau der elektrisch leitenden Stoffe, aus welchen die Schicht aus absorbierendem und dissipierendem Material (12, 12A) zusammengesetzt ist, einen ballistischen Grenzwert, ausgedrückt bezüglich einer Aufprallgeschwindigkeit, die einer Perforationswahrscheinlichkeit von 50% entspricht, von mindestens 350 Metern pro Sekunde aufweist, wobei der Grenzwert mit Hilfe eines Korn-17 (17 grain) Splittersimulatorprojektils gemäss dem US-Militärstandard MIL-P-46593-A gemessen wird.

5. Verbundwerkstoffstruktur nach Anspruch 1, die eine einfallende elektromagnetische Strahlungsenergie absorbieren und dissipieren kann, **dadurch gekennzeichnet, dass** die von der Struktur reflektierte elektromagnetische Strahlungsenergie sowohl in horizontaler als auch in vertikaler Polarisation des elektromagnetischen Felds im Mittel zumindest 1/100 derjenigen Energie beträgt, die von einer ideal reflektierenden, vergleichbaren Struktur reflektiert wird, und zwar innerhalb eines Frequenzbereichs der einfallenden elektromagnetischen Strahlung von 1 Gigahertz bis 30 Gigahertz.

6. Verbundwerkstoffstruktur nach Anspruch 1, die eine einfallende elektromagnetische Strahlungsenergie absorbieren und dissipieren kann, **dadurch gekennzeichnet, dass** der Dikkenbereich der Schicht aus absorbierendem und dissipierendem Material (12, 12A) von 0,1 Millimeter bis 3 Zentimeter reicht.

7. Verbundwerkstoffstruktur nach Anspruch 1, die eine einfallende elektromagnetische Strahlungsenergie absorbieren und dissipieren kann, **dadurch gekennzeichnet, dass** der Dikkenbereich der Struktur von 1 Millimeter bis 100 Millimeter reicht.

## Revendications

1. Structure de matériau composite apte à absorber et dissiper l'énergie de rayonnement électromagnétique incident, du type utilisé pour des véhicules routiers, des navires et des aéronefs et pour des installations fixées à la terre, comprenant au moins une couche de peinture (10), au moins une couche de matériau diélectrique (11, 11A, 11B), au moins une couche de matériau absorbant et dissipatif (12, 12A), apte à absorber et dissiper l'énergie de rayonnement électromagnétique incident et composée de substances diélectriques mélangées à des substances conductrices, et au moins une couche de matériau conducteur (13), apte à réfléchir le rayonnement électromagnétique incident, dans laquelle lesdites couches de matériau diélectrique (11, 11A, 11B) et lesdites couches de matériau absorbant et dissipatif (12, 12A) sont réduites à des feuilles et lesdites couches de peinture (10), lesdites couches de matériau diélectrique (11, 11A, 11B), lesdites couches de matériau absorbant et dissipatif (12, 12A) et lesdites couches de matériau conducteur (13), formant l'ensemble de la structure, sont assemblées au moyen de substances adhésives, lesdites substances conductrices étant constituées d'une pluralité de dipôles en fibres de carbone, **caractérisée en ce que** lesdits dipôles en fibres de carbone ont une forme cylindrique, avec une longueur variant de 1 à 15 mm, un diamètre de base variant de 0,1 à 20 µm et un poids inférieur ou égal à 2 grammes par m² de ladite couche de matériau absorbant et dissipatif (12, 12A), **en ce que** ladite couche de matériau absorbant et dissipatif (12, 12A) a une résistance à la traction d'au moins 15 N par mm² et **en ce que** ladite structure de matériau composite a un module normal d'élasticité d'au moins 2500 N par mm² de la surface de la structure.

2. Structure de matériau composite apte à absorber et dissiper l'énergie de rayonnement électromagnétique incident selon la revendication 1, **caractérisée en ce que** lesdites substances diélectriques mélangées auxdites substances conductrices sont composées de résines ou de matières plastiques ou de mousses de polyuréthane.

3. Structure de matériau composite apte à absorber et dissiper l'énergie de rayonnement électromagnétique incident selon la revendication 1, **caractérisée en ce que** ladite couche de peinture (10), lesdites couches de matériau diélectrique (11, 11A, 11B), lesdites couches de matériau absorbant et dissipatif (12, 12A) et lesdites couches de matériau conducteur (13), qui forment l'ensemble de la structure, sont assemblées au moyen de résines époxydes.

4. Structure de matériau composite apte à absorber et dissiper l'énergie de rayonnement électromagnétique incident selon la revendication 1, **caractérisée en ce que** l'ensemble desdites substances conductrices, composant ladite couche de matériau absorbant et dissipatif (12, 12A), présente une limite balistique, exprimée en termes de vitesse d'impact correspondant à une probabilité de perforation de 50%, d'au moins 350 mètres par seconde, ladite limite étant mesurée par un missile de simulation volant en éclats en 17 grains selon la norme militaire U.S. MIL-P-46593-A.

5. Structure de matériau composite apte à absorber et dissiper l'énergie de rayonnement électromagnétique incident selon la revendication 1, **caractérisée en ce que** l'énergie de rayonnement électromagnétique réfléchie par ladite structure, dans les polarisations horizontale et verticale du champ électromagnétique, correspond en moyenne à au moins 1/100 de l'énergie réfléchie, dans l'idéal, par une structure réfléchissante similaire dans une gamme de fréquences dudit rayonnement électromagnétique incident comprise entre 1 gigahertz et 30 gigahertz.

6. Structure de matériau composite apte à absorber et dissiper l'énergie de rayonnement électromagnétique incident selon la revendication 1, **caractérisée en ce que** la gamme d'épaisseurs de ladite couche de matériau absorbant et dissipatif (12, 12A) est comprise entre 0,1 millimètre et 3 centimètres.

7. Structure de matériau composite apte à absorber et dissiper l'énergie de rayonnement électromagnétique incident selon la revendication 1, **caractérisée en ce que** la gamme d'épaisseurs de ladite structure est comprise entre 1 millimètre et 100 millimètres.
